# EUROPEAN PATENT APPLICATION

(11) **EP 2 015 537 A1**
(43) Date of publication of application: **14.01.2009**
(21) Application number: 07112296.4
(22) Date of filing: 11.07.2007
(51) Int. Cl.: H04L 29/06

(54) **Multimode customer premises gateway providing access to internet protocol multimedia subsystem (IMS) services and non-IMS services**

(71) Applicant: GENERAL INSTRUMENT CORPORATION, Horsham, Pennsylvania 19044 (US)
(72) Inventor: Al-Bakri, Ban, 06160 Juan Les Pins (FR)
(74) Representative: Jepsen, René Pihl

(57) **Abstract**

A multimode customer premises gateway supports multiple different types of telecommunications signaling protocols to allow different types of user devices to connect to the gateway and access both Internet Protocol multimedia subsystem (IMS), and non-IMS services. The gateway includes a connection manager configured to provide a non-IMS user device connected to the gateway with access to an IMS service using an IP multimedia services identity module (ISIM) for the gateway. A protocol converter translates information between an IMS protocol and a non-IMS protocol to enable the connection manager to provide the non-IMS device with access to the IMS service. The connection manager is also configured to provide an IMS user device with access to the IMS service and to provide a non-IMS user device with access to a non-IMS service.

## Description

### FIELD OF INVENTION

Disclosed herein are various embodiments related to a multimode customer premises gateway supporting multiple different types of telecommunications signaling protocols and providing access to Internet Protocol Multimedia Subsystem (IMS) and non-IMS services.

### BACKGROUND

In today's fast-paced, data-intensive world, people are demanding access to data services anywhere and at any time, no matter what device they are using. Service providers are currently providing these data services to users, for example, through wired broadband connections connecting homes or businesses to the Internet or through wireless, broadband connections connecting cellular phones or other wireless devices to the Internet.

A new type of network architecture for providing voice and data services, which is gaining in popularity, is the Internet Protocol Multimedia Subsystem (IMS). IMS is an architectural framework, originally designed by the wireless standards body 3GPP for delivering Internet Protocol (IP) multimedia services to end users. IMS may be used to deliver audio, video, gaming and other multimedia services to wired and wireless user equipment, such as cellular phones, personal computers (PCs), personal digital assistants (PDAs) and other devices via broadband networks.

When users are at home or at work, they typically receive non-IMS data services, such as Internet access, Voice-Over-Internet-Protocol (VoIP) and other services through a gateway and a modem connected to the gateway or integrated with the gateway. If a user desires to access an IMS service, the user is expected to have an IMS subscription to the service and an IMS identity. Also, currently, IMS services can only be accessed by user devices having an IMS identity. A non-IMS user device cannot access an IMS service, unless it has an IMS identity and a subscription to the service. Also, the non-IMS user device may not have the ability to communicate using an IMS protocol to access the IMS service. Typically, the user devices connected to the gateway and modem at the customer premises are non-IMS devices that are not capable of performing the signaling to access an IMS service or do not have an IMS identity. Furthermore, even if an IMS user device capable of performing the signaling to access an IMS service and having an IMS identity is connected to the gateway, the IMS user device may not be able to access the IMS service because the device or user does not have a subscription to the IMS service.

### SUMMARY

According to an embodiment, a multimode customer premises gateway supports multiple different types of telecommunications signaling protocols to allow different types of user devices to connect to the gateway and access both Internet Protocol multimedia subsystem (IMS), and non-IMS services. The gateway includes a connection manager configured to provide a non-IMS user device connected to the gateway with access to an IMS service using an IP multimedia services identity module (ISIM) for the gateway. A protocol converter translates information between an IMS protocol and a non-IMS protocol to enable the connection manager to provide the non-IMS device with access to the IMS service. The connection manager is also configured to provide an IMS user device with access to the IMS service and to provide a non-IMS user device with access to a non-IMS service.

The customer premises gateway is a multimode gateway operable to function in multiple modes simultaneously to allow different types of user devices to have access to IMS services and non-IMS services. Furthermore, the protocol converter may be used at the gateway to provide a non-IMS user device with access to an IMS service.

### BRIEF DESCRIPTION OF THE DRAWINGS

Various features of the embodiments described in the following detailed description can be more fully appreciated when considered with reference to the accompanying figures, wherein the same numbers refer to the same elements.
Figure 1 illustrates a system providing IMS and non-IMS services to user devices at a customer premises, according to an embodiment;
Figure 2 illustrates a multimode customer premises gateway, according to an embodiment;
Figure 3A illustrates a method for capturing information to be used for providing IMS and non-IMS services to user devices at a customer premises, according to an embodiment;
Figure 3B illustrates a method for enabling access to IMS and non-IMS services using a multimode customer premises gateway, according to an embodiment; and
Figure 4 illustrates a general purpose computer system, according to an embodiment.

### DETAILED DESCRIPTION

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments.

According to an embodiment, a multimode customer premises gateway supports multiple different types of telecommunications signaling protocols to allow different types of user devices to connect to the gateway for accessing IMS and non-IMS services.

A customer premises gateway is a point between a network for a service provider and a customer premises. For example, a customer premises may be a residence or an office or another structure or location with a broadband network connection for providing Internet access or access to other networks. A cable or telephone company may be the service provider. The customer premises gateway connects customer premises equipment (CPE), such as a modem and/or other CPE, to the service provider's network. The gateway may be provided by a service provider, such as a cable or telephone service provider. The service provider network terminates at the gateway.

The IMS makes available voice services as well as data services, such as multimedia and voice applications, provided via an IP multimedia subsystem, which is IMS. IMS is a network architecture standardized by the 3GPP standards body for delivering IP multimedia services to end users. Examples of IMS services are voice-over-IP (VoIP), video teleconferencing, gaming, etc. Non-IMS services are voice and data services not provided via an IMS, which may also include VoIP, video teleconferencing, etc. Both IMS and non-IMS services may be provided via a broadband network, but the IMS services are provided via an IMS. According to an embodiment, the customer premises gateway enables user devices at the customer premises access to both IMS and non-IMS services via gateway.

The multimode gateway is operable to function in multiple modes simultaneously to allow different types of user devices to have access to IMS services and non-IMS services. The gateway includes a protocol converter translating telecommunications signaling protocols to provide different types of user devices with compatibility to access different services.

In one mode, the gateway is operable to provide a non-IMS user device with access to an IMS service by using the protocol converter to translate between an IMS protocol and a non-IMS protocol. The IMS protocol is a session initiation protocol (SIP) defined by the Internet Engineering Task Force (IETF) standards organization. SIP is used to find and connect to IMS service providers and for sending and receiving information for IMS services and for session management.

In this mode, a non-IMS protocol may be used to communicate information between the non-IMS user device and the gateway. The non-IMS protocol may be a public switched telephone network (PSTN) protocol or an integrated services digital network (ISDN) protocol if the user device is a PSTN or an ISDN device. The non-IMS protocol may be local area network (LAN) protocol if the user device is connected via a LAN to the gateway. For example, the protocol may be a wireless LAN protocol, such as Bluetooth or WiFi. Other types of non-IMS protocols may also be used to communicate between the user device and the gateway. The protocol converter may convert between different types of non-IMS protocols. The IMS and non-IMS protocols are considered telecommunication signaling protocols.

The protocol converter converts between the IMS and non-IMS protocol used by the non-IMS device, and vice versa, to allow the non-IMS user device to access the IMS service and to send and receive information for the IMS service. A non-IMS user device is a user device that does not have an IP multimedia services identity module (ISIM) and does not communicate using the IMS protocol. For example, if the IMS service is a video call service, the gateway originates the service for the non-IMS device and translates video and audio received at the gateway using the IMS protocol to a non-IMS protocol used by the user device. Also, the gateway translates information received from the user device to the IMS protocol, so the information may be communicated to the IMS service provider.

The gateway may operate in other modes also. For example, the gateway may provide IMS user devices with access to an IMS service. Also, the gateway may provide non-IMS and IMS user devices with access to non-IMS services. For example, conventionally, a gateway may be connected to a modem to provide a user with Internet service, VoIP service via a media terminal adapter, etc. The gateway may operate to provide these and other non-IMS services to non-IMS devices.

In one embodiment, the gateway has an ISIM and a subscription to an IMS service, and it uses its ISIM and subscription to access the IMS service for non-IMS and IMS user devices connected to the gateway. An ISIM is an application running on a universal integrated circuit card (UICC) smart card. The ISIM is described in a 3GPP standard. The ISIM contains an IMS subscriber identity (i.e., a private user identity and one or more public user identities) which is required to access an IMS service. The ISIM application can co-exist on a UICC with a subscriber identity module (SIM) and a universal subscriber identity module (USIM). SIM is used in mobile phones to access a global system for mobile communications (GSM) network, and USIM is an application for universal mobile telecommunications system (UMTS). The gateway includes an ISIM and may also include a SIM and USIM. The ISIM may be a "hard" ISIM on a UICC card or a "soft" ISIM, where the ISIM application and subscriber identities are provided directly to the user equipment, such as the gateway 110, without a UICC. The gateway may be able to use multiple modules, such as multiple ISIMs or an ISIM, SIM on a UICC, multiple soft ISIMs, etc.

The gateway uses its ISIM to access an IMS service for a user device. For example, a user agent running on the gateway uses the ISIM of the gateway and an IMS subscription for the IMS service to originate the IMS service. A user device connected to the gateway accesses the IMS service using the ISIM of the gateway and the same subscription. For example, the user device runs an instance of the user agent, but would like to use the gateway subscription, or a user device which does not include an ISIM will use the user agent running on the gateway to access the IMS service, including sending and receiving data to/from the IMS service provider. From the point of view of the IMS service provider, the IMS service terminates at the gateway even though other user devices connected to the gateway may access the IMS service using the single subscription.

In another embodiment, the gateway uses the ISIM of a user device connected to the gateway to access the service. In this embodiment, the gateway simply acts as a pass-through for passing signaling between the user device and the IMS service provider. The gateway may determine whether to use its ISIM or the ISIM of the user device based on user preferences or policies stored in the gateway or instructions configured in or received from the user device when requesting access to an IMS service.

The gateway may operate in multiple different modes simultaneously to enable access to multiple different services for multiple different types of user devices connected to the gateway. This may include multiple IMS services and/or multiple non-IMS services. The gateway may use session IDs for active services and identities of user devices to differentiate between multiple active services and to provide multiple user devices with access to the different services. In addition to providing IMS services, the gateway also provides user devices connected to the gateway with non-IMS services.

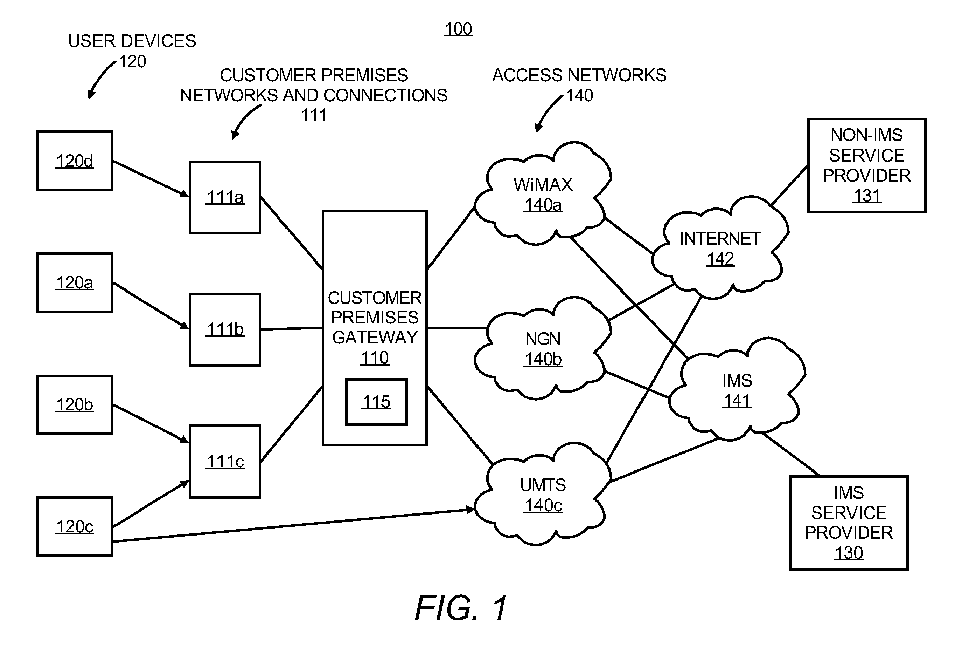

Figure 1 illustrates a system 100, according to an embodiment. The system 100 shows a customer premises gateway 110 connecting user devices 120 with an IMS service provider 130 and a non-IMS service provider 131 via access networks 140. The customer premises gateway 110 is the point between the service provider network and the customer premises that provides the user devices with access to the IMS and non-IMS services.

The gateway 110 may communicate over one or more of the access networks 140 to access the IMS and non-IMS services. Examples of the access networks 140 are shown and may include Worldwide Interoperability for Microwave Access (WiMAX) 140a, Next Generation Networks (NGN) 140b, Universal Mobile Telecommunications System (UMTS) 140c, and the Internet 142. The access networks 140 may include broadband, IP networks. The non-IMS service provider 131 is shown by way of example as connected via the Internet to the gateway 110, but non-IMS service providers may be connected via other networks. The IMS service provider 130 is connected via an IMS 141 to the gateway 110. A single IMS and non-IMS service provider are shown, but the gateway 110 may access multiple IMS and non-IMS service providers to access desired services.

On the customer premises side of the system 100, the user devices 120 may be connected to the gateway 110 via one or more customer premises networks or connections 111. For example, user device 120a may be connected to the gateway 110 via connection 111b, which may include a wired Ethernet LAN from a digital subscriber line (DSL) or cable connection and modem. User devices 120b and 120c may be connected to the gateway 110 via a WiFi network or UMA, represented by 111c. User device 120d may be connected to the gateway 110 via WiMAX, represented by 111a. In some instances, a user device may be able to connect to a service provider via a customer premises network or connection and the gateway 110 and also connect to a service provider directly through an access network without going through the gateway 110. For example, the user device 120c may be a mobile phone that can connect via the UMTS 140c to a service provider and connect via WiFi and the gateway 110 to a service provider.

Each of the different types of networks and connections 111 and the user devices 120 may use different protocols to communicate with the gateway 110. Also, each of the access networks 140 and the service providers and other entities communicating with the gateway 110 using the access networks 140 may also use a different protocol. The gateway 110 includes a protocol converter 115 to convert protocols for sending and receiving information on the access network side of the gateway 110 to protocols understood by the user devices 120 on the customer premises side of the gateway 110. This includes converting an IMS protocol to a non-IMS protocol and vice versa.

The gateway 110 may operate as a proxy for the user devices 120 to provide access to IMS and non-IMS services, such as described above. In one embodiment, the gateway 110 maps a user agent for the gateway 110 to instances of the user agent running on one or more of the user devices to provide access to an IMS service.

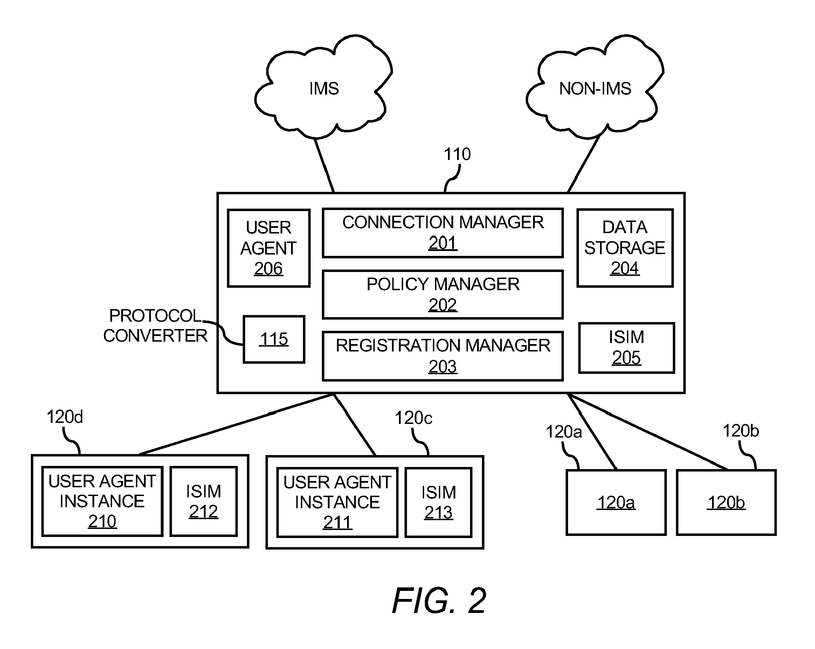

Figure 2 illustrates the gateway 110, according to an embodiment. The gateway 110 includes a connection manager 201, a policy manager 202, a registration manager 203, a data storage 204, an ISIM module 205 and the protocol converter 115. The connection manager 201, policy manager 202, and registration manager 203 may be implemented as software, hardware or a combination of hardware and software. Also, many well known components of the gateway 110 are not shown but are provided in the gateway 110.

The registration manager 203 stores information for users and the user devices 120 that may be connected to the gateway 110. The information may be stored in the data storage 204. The information may include user profiles, user device capabilities and ISM subscriber identities for the user devices if the devices are ISM devices and/or other unique identification for the user devices 120, e.g., MAC address or IP address, so the gateway may communicate with each user device. For example, when a user device is connecting to the gateway 110, the user device sends its information to the gateway 110. The registration manager 203 captures the information and stores the information in the data storage 204. The information may include a description of the device, such as mobile phone, laptop or PC, personal digital assistant, cordless telephone, etc., and the user device capabilities may be sent or inferred from the device description. An ID is also sent to the gateway 110. Then, the gateway 110 can determine which user devices are connected and their capabilities, and the gateway 110 may select a connected user device to receive a service based on user preferences, policies and user device capabilities. When multiple user devices are connected the gateway 110 and multiple services are being provided to the user devices via the gateway 110, the gateway 110 may user the user device IDs and service session IDs to differentiate between the user devices and the active services to provide the desired service to the user device requesting the service.

The device capabilities stored in the data storage 204 may include the protocol used by the user device. For example, the device capabilities may indicate that the user device 120a is a PSTN or ISDN device and uses a particular PSTN or ISDN protocol. Similarly, the device capabilities may indicate the user device 120b connects to the gateway via WiFi and thus uses a WiFi protocol. In one embodiment, the protocol converter 115 may determine the protocol used by the user device from the device capabilities stored in the data storage 204. The registration manager 203 may store in the data storage 204 an indication of the protocol used by each of the user devices 120 to communicate with the gateway 110. The connection manager 201 may determine the protocol used by the user device from the protocol information stored in the data storage 204 for the user device. The connection manager 201 may instruct the protocol converter 115 to translate information received in a first protocol to a protocol used by the user device in response to determining the protocol for the user device from the information stored in the data storage 204.

The registration manager 203 may also store protocols used by service providers to communicate with the gateway 110. The connection manager 201 may determine the protocol used by a service provider from the protocol information stored in the data storage 204 for the user device. The connection manager 201 may instruct the protocol converter 115 to translate information received in a first protocol to a protocol used by the service provider.

The registration manager 203 may also store protocol information for the user devices 120d and 120c. For example, the user devices 120d and 120c may be IMS devices, and the protocol information for these devices stored in the data storage 204 may indicate that no IMS protocol translation is needed for these devices to access an IMS service. The information may also indicate whether these user devices are to access particular services using the ISIM and IMS subscriptions for the user devices or using the ISIM and IMS subscriptions for the gateway 110.

The policy manager 202 captures user preferences and allows the gateway 110 to make decisions on which user device is the best user device to terminate, access or originate service. For example, a video call is received at the gateway 110. A policy related to a user, a user device, and/or a context of the service, such as the type of service, is identified. The policy may indicate that if the user receiving the call is at home, then use the TV and settop box to receive the video call via the gateway 110 instead of a mobile phone. If the user is identified as being at home, for example, determined through registration, then the video call is terminated at the TV and settop box instead of the user's mobile phone.

The policies may be received during registration as user preferences for a user's profile and stored in the data storage 204. Policies may be provided during an initial registration or by administration (operator and/or user control), but need not be specified every time a user device is registered unless there are policy updates or new policies that need to be stored.

The connection manager 201 provides the user devices 120 with connections to broadband networks and services, including IMS and non-IMS services. In one embodiment, the connection manager 201 may originate and terminate IMS services from the point of view of the IMS service provider, and the connection manager 201 provides the user devices 120 with access to the IMS services.

For example, the gateway 110 has an ISIM 205 providing an ISM subscriber identity for the gateway 110. The gateway 110 originates and accesses an IMS service using the ISIM of the gateway and a subscription to the IMS service. For example, a user agent 206 running on the gateway 110 uses the IMS subscription and the ISIM of the gateway 110 to originate the IMS service. A user agent may be provided for each IMS service to originate and access.

A user device connected to the gateway 110 accesses the IMS service using an instance of the user agent 206. For example, user devices 120c and 120d are ISM devices operable to access IMS services. The user devices 120c and 120d may have their own ISIMs 212 and 213, respectively. The user devices 120c and 120d run user agent instances 210 and 211, respectively. The user agent instances 210 and 211are instances of the user agent 206 on the gateway 110.

After the IMS service is originated by the gateway 110 using the user agent 206, the user agent instances 210 and 211 provide the user devices 120d and 120c with access to the service. For example, after a session for the IMS is originated, the connection manager 201 may forward data to one or more of the devices 120d and 120c from the IMS service provider and forward data to the IMS service provider from one or more of the devices 120d and 120c. For example, if the IMS service is providing a video call, after the session is started using the user agent 206, the video call data is forwarded to the user device 120d, and the user agent 210 hosted by the user device 120d is used to access the IMS service. Also, video call data, such as streaming audio and video, is forwarded from the user agent 210 to the connection manager 201. The connection manager 201 sends the video call data to the service provider using the user agent 206. If the connection manager 201 receives indication from the user agent 210 that the video call is to be terminated, the connection manager 201 terminates the service using the user agent 206. Thus, from the perspective of the service provider, conventional IMS service origination, access and termination is performed with the user agent 206. However, the gateway 110 is transparently providing the user devices with access to the IMS service. Also, the one subscription may be used to for the user devices 120d and 120c to access the service.

In the example described above, the connection manager 201 maps the user agent 206 to the user agent instance 210 in the user device 120d to provide the user device 120d with access to the IMS service. Mapping may include identifying the user devices to receive the service and providing those user devices with access to the service. Mapping may also include selecting the user devices to receive the services based on policies.

For example, the connection manager 201 determines that the video call is received for a particular telephone number. The connection manager 201 requests the policy manager 202 to determine whether any policies are stored that may be associated with the service context or the user or the telephone number. The policy manager 202 identifies a stored policy for the telephone number that indicates to provide the user device 120d, such as a settop box and TV, with access to the service so the user device 120d can receive the call. The policy may also indicate to provide notification that a video call is received to any other IMS user device that is connected to the gateway 110.

The policy manager 202 notifies the connection manager 201 of the policies. The connection manager identifies that the user devices 120d and 120c are currently connected to the gateway 110. The connection manager 201 provides the user device 120 via the user agent instance 210 with access to the service, so the user device 120 may receive the video call. The connection manager 201 may identify the user devices 120d and 120c using their ISIMs or other unique identifiers. Also, the connection manager 201 provides notice to the user device 120c via the user agent 211 that the video call is received. A different policy may be provided for a different service context. For example, for a video game IMS service, access is provided to a gaming console user device.

These examples generally describe mapping the IMS service to a single user device. However, the gateway 110 is operable to map a service to multiple user devices simultaneously. Also, multiple different services may be mapped to a single or multiple user devices simultaneously. Also, the gateway 110 may be connected to different access networks, such as shown in figure 1 with respect to the access networks 140. Different user devices may be connected to service providers via different access networks. The connection manager 201 manages the connections via different access networks. Also, if a user device hosts an ISIM, such as the user device 120d, and the user device is capable of hosting a user agent instance for the same service, then the user device may connect to the service via different access networks. For example, a mobile phone may connect via UMTS or connect via an NGN access network.

The connection manager 201 may use more than one subscription to access one or more services. For example, a user device for a guest may register with the gateway 110, and the IMS subscription of the guest may be used to access an IMS service via the gateway 110. In this example, the guest may be charged by the service provider for their use of the service since the guest's subscription is being used.

In another embodiment, an IMS service is originated by the user device, and the connection manager 201 operates as a pass-through for the signaling and transferring of data. For example, the user agent 210 on the user device 120d originates an IMS service using its ISIM 212. The connection manager 201 detects the request for service including the ISMI of the user device 120d, and forwards the signaling to the service provider for originating, accessing and terminating the service at the user device 120d.

The connection manager 201 is also operable to provide services to user devices, including Public Switched Telephone Network (PSTN) and Integrated Services Digital Network (ISDN) services, Session Initiation Protocol (SIP)-based services that are non-IMS, Internet service, etc. to user devices. For example, the user devices 120a and 120b may access one or more of these services via the gateway 110.

Figure 2 shows an IMS and non-IMS cloud connected to the gateway 110. The IMS and non-IMS clouds represent the access networks and IMS and non-IMS service providers shown in figure 1, which are connected to the gateway 110.

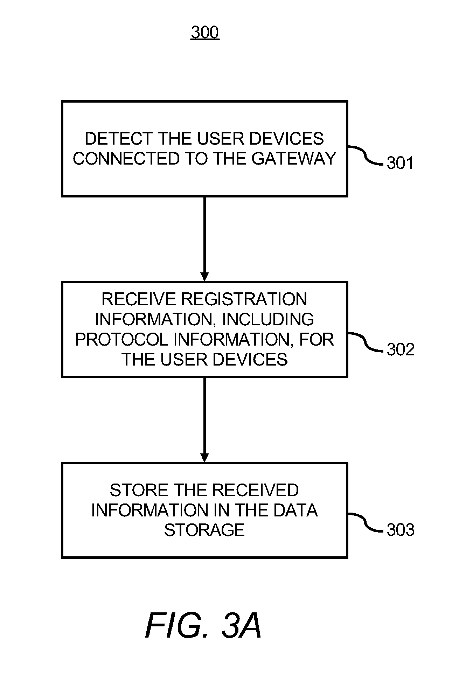

Figure 3A illustrates a flow chart of a method 300 for capturing information to be used for providing multiple different types of user devices with access to IMS and non-IMS services via a customer premises, according to an embodiment. The method 300 is described with respect to figures 1 and 2 by way of example and not limitation.

At step 301, the gateway 110 detects the user devices 120 connected to the gateway. For example, the gateway 110 may detect when a user device is connected via a local area network (LAN) at the customer premises or otherwise connected to the gateway 110.

At step 302, the gateway 110 receives user device registration information, including protocol information, for the user devices 120. For example, the registration manager 203 requests information from the user devices 120, including, for example, user device IDs, capabilities of the user devices, telecommunications signaling protocol used by each device, user IDs, user profiles, and policies. The information is transmitted from the user devices to the gateway 110. When a user device registers with the gateway 110 for the first time, the registration manager 203 may request all or most of this information. Subsequently, when the user device connects to the gateway 110, the user device may provide a minimal amount of information, such as only the unique ID and an indication of the user of the device.

At step 303, the gateway 110 stores the received information in the data storage 204.

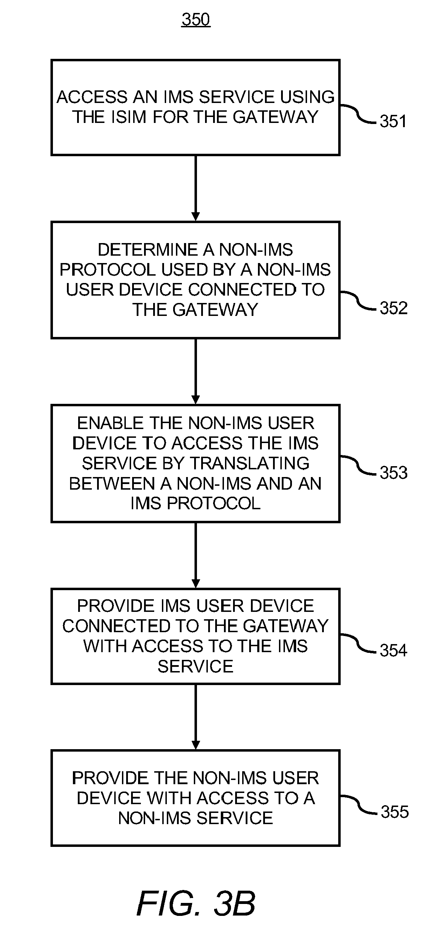

Figure 3B illustrates a flow chart of a method 350 for a multimode customer premises gateway to function in multiple modes simultaneously to allow different types of user devices to have access to IMS services and non-IMS services, according to an embodiment. The method 350 is described with respect to figures 1 and 2 by way of example and not limitation.

At step 351, the gateway 110 accesses an IMS service using an ISIM for the gateway110. For example, the ISIM and the gateway's subscription for the IMS service are used to originate and access the service.

At step 352, the gateway 110 determines a non-IMS protocol used by a user device connected to the gateway 110. For example, when a non-IMS user device registers with the gateway 110, the gateway 110 stores an indication of the protocol used by the non-IMS user device. Alternatively, the gateway 110 automatically identifies the protocol used by the non-IMS device based on the format of received data or from the handshaking used to communicate with the gateway 110.

At step 353, the gateway 110 enables the non-IMS user device to access the IMS service by translating between protocols for the non-IMS user device and for the IMS user service. This includes converting between IMS and non-IMS signaling. For example, after the service is originated by the gateway 110, the gateway 110 sends information for the IMS service to the non-IMS user device and receives information from the non-IMS user device for the IMS service. The gateway 110 provides the IMS service information transmitted to the non-IMS user device in the protocol used by that user device. The gateway 110 also provides the IMS service information from the non-IMS user device to the IMS service provider in the IMS protocol.

At step 354, the gateway 110 provides an IMS user device connected to the gateway 110 with access to the IMS service. For example, the connection manager 201 is operable to provide the IMS service to the user devices 120d and 120c by mapping the user agent 206 to the user agent instances 210 and 211 shown in figure 2. Mapping may be based on the user devices requesting the service, user preferences and policies. It should be noted that in one embodiment the user devices access the service using the ISM subscriber identity of the gateway 110 and a single IMS subscription. Also, the stored user device IDs may be used to identify the user devices to access the service and provide the IMS service to those devices. This may include sending information to and receiving information from the user devices for the IMS service.

At step 355, the gateway 110 provides a non-IMS user device connected to the gateway 110 with access to a non-IMS service. For example, the gateway 110 provides Internet access for a user device.

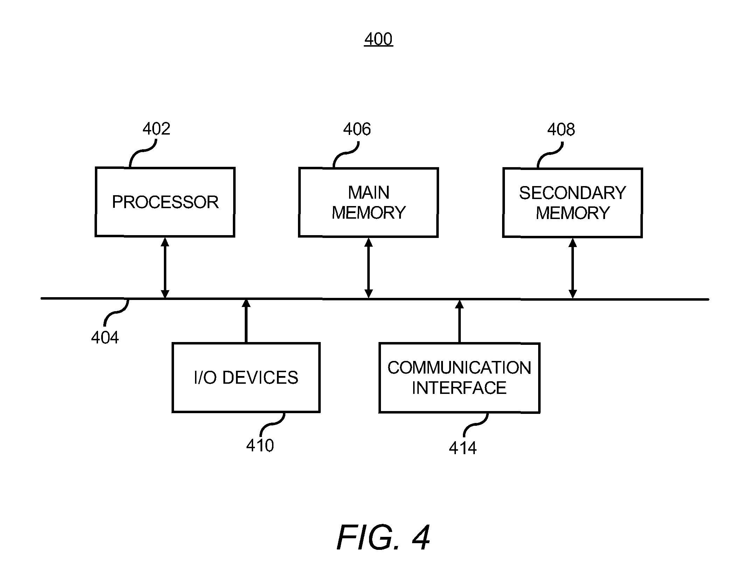

Figure 4 illustrates a block diagram of a general purpose computer system 400 that is operable to be used as a platform for the components of the system 100 described above. For example, the system 400 may be representative of a platform for the gateway 110 or one or more of the user devices 120 shown in figures 1 and 2. Components may be added or removed from the general purpose system 400 to provide the desired functionality.

The system 400 includes a processor 402, providing an execution platform for executing software. Commands and data from the processor 402 are communicated over a communication bus 403. The system 400 also includes a main memory 406, such as a Random Access Memory (RAM), where software may reside during runtime, and a secondary memory 408. The secondary memory 408 may include, for example, a nonvolatile memory where a copy of software is stored. In one example, the secondary memory 408 also includes ROM (read only memory), EPROM (erasable, programmable ROM), EEPROM (electrically erasable, programmable ROM).

The system 400 includes I/O devices 410. The I/O devices may include a display and/or user interfaces comprising one or more I/O devices 410, such as a keyboard, a mouse, a stylus, speaker, and the like. A communication interface 413 is provided for communicating with other components. The communication interface 413 may be a wired or a wireless interface. The communication interface 413 may be a network interface.

One or more of the steps in the methods 300 and 350 and other steps described herein are operable to be implemented as software stored on a computer readable medium, such as the memory 406 and/or 408, and executed on the system 400, for example, by the processor 402.

The steps are operable to be embodied by a computer program, which can exist in a variety of forms both active and inactive. For example, they exist as software program(s) comprised of program instructions in source code, object code, executable code or other formats for performing some of the steps. The codes described above may be embodied on a computer readable medium, which include storage devices and signals, in compressed or uncompressed form. Examples of suitable computer readable storage devices include conventional computer system RAM (random access memory), ROM (read only memory), EPROM (erasable, programmable ROM), EEPROM (electrically erasable, programmable ROM), and magnetic or optical disks or tapes. Examples of computer readable signals, whether modulated using a carrier or not, are signals that a computer system running the computer program may be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general. It is therefore to be understood that those functions enumerated below may be performed by any electronic device capable of executing the above-described functions.

While the embodiments have been described with reference to examples, those skilled in the art will be able to make various modifications to the described embodiments without departing from the true spirit and scope. The terms and descriptions used herein are set forth by way of illustration only and are not meant as limitations. In particular, although the methods have been described by examples, steps of the methods may be performed in different orders than illustrated or simultaneously. Those skilled in the art will recognize that these and other variations are possible within the spirit and scope as defined in the following claims and their equivalents.

## Claims

1. A multimode customer premises gateway supporting multiple different types of telecommunications signaling protocols to allow different types of user devices to connect to the gateway, the gateway comprising:
a connection manager configured to provide a non-Internet Protocol multimedia subsystem (IMS) user device connected to the gateway with access to an IMS service using an IP multimedia services identity module (ISIM) for the gateway; and
a protocol converter translating information between at least two different protocols, including an IMS protocol and a non-IMS protocol, to enable the connection manager to provide the non-IMS user device with access to the IMS service;
wherein the connection manager is also configured to provide an IMS user device connected to the gateway with access to the IMS service using the ISIM for the gateway and to provide the non-IMS user device with access to a non-IMS service.

2. The multimode customer premises gateway of claim 1, wherein when the connection manger provides the IMS user device connected to the gateway with access to the IMS service using the ISIM for the gateway, the connection manager uses a subscription for the IMS service provided by the gateway instead of a subscription provided by the IMS device.

3. The multimode customer premises gateway of claim 1, wherein the connection manager is configured to use the protocol converter to convert IMS protocol signaling to public switched telephone network (PSTN) or integrated services digital network (ISDN) signaling to provide a PSTN device or an ISDN device connected to the gateway with access to the IMS service.

4. The multimode customer premises gateway of claim 1, wherein the connection manager is operable to detect a request to access the IMS service from an IMS user device having an ISIM and to provide access to the IMS service using the ISIM of the user device instead of the ISIM of the gateway.

5. The multimode customer premises gateway of claim 1, wherein the ISIM for the gateway comprises a hard ISIM.

6. The multimode customer premises gateway of claim 1, wherein the ISIM for the gateway comprises a soft ISIM.

7. The multimode customer premises gateway of claim 1, wherein the gateway supports a plurality of ISIMs and a plurality of IMS subscriptions.

8. The multimode customer premises gateway of claim 1, wherein the connection manager allows a user agent running on a second IMS user device connected to the gateway to access an IMS service using an ISIM for the second IMS user device instead of the ISIM for the gateway.

9. The multimode customer premises gateway of claim 1, wherein the connection manager is configured to simultaneously provide the non-IMS device and the IMS device with access to the IMS service.

10. A method of using a multimode customer premises gateway supporting multiple different telecommunications signaling to provide access to an IMS service and a non-IMS service, the method comprising:
storing information for user devices connected to the gateway at the gateway;
accessing the IMS service using an ISIM for the gateway; and
enabling a non-IMS user device to access the IMS service using the stored information for the user device and using the ISIM for the gateway;
translating between a non-IMS protocol and an IMS protocol to enable a non-IMS user device to access the IMS service via the gateway using the stored information for the user device and using the ISIM for the gateway;
providing an IMS user device with access to the IMS service via the gateway using the stored information for the IMS user device and the ISIM for the gateway; and
providing the non-IMS user device with access to a non-IMS service via the gateway.

11. The method of claim 10, wherein enabling access to the IMS service for the non-IMS user device and providing the IMS user device with access to the IMS service further comprises:
using a single subscription provided by the gateway to allow both the IMS and non-IMS user device to access the IMS service.

12. The method of claim 10, wherein translating between a non-IMS protocol and an IMS protocol comprises:
converting IMS signaling to PSTN or ISDN signaling to provide a PSTN user device or an ISDN user device access to the IMS service.

13. The method of claim 10, further comprising:
detecting a request to access the IMS service from another IMS user device having an ISIM; and
providing access to the IMS service using the ISIM of the another IMS user device instead of the ISIM of the gateway.

14. A computer readable medium upon which is embedded programmed instructions which when executed by a processor will cause the processor to perform a method of using a multimode customer premises gateway supporting multiple different telecommunications signaling to provide access to an IMS service and a non-IMS service, the method comprising:
storing information for user devices connected to the gateway at the gateway;
originating the IMS service using an ISIM for the gateway and a subscription for the IMS service;
providing a non-IMS user device of the user devices connected to the gateway with access to the IMS service using the ISIM and an IMS subscription for the gateway and by translating between a non-IMS protocol and an IMS protocol to allow the non-IMS user device to send and receive information for the IMS service via the gateway;
providing an IMS user device of the IMS user devices with access to the IMS service via the gateway using the ISIM and the IMS subscription for the gateway; and
providing the non-IMS user device with access to a non-IMS service via the gateway.

15. The computer-readable medium of claim 14, wherein translating between protocols comprises:
translating between an IMS protocol and a non-IMS protocol user by a PSTN user device or an ISDN user device connected to the gateway.

16. The computer-readable medium of claim 14, further comprising:
detecting a request to access the IMS service from another IMS user device having an ISIM; and
providing access to the IMS service using the ISIM of the another IMS user device instead of the ISIM of the gateway.
